(19) Europäisches Patentamt

European Patent Office

Office européen des brevets

(11) **EP 1 076 187 A2**

(12) **EUROPEAN PATENT APPLICATION**

(43) Date of publication:
**14.02.2001 Bulletin 2001/07**

(51) Int. Cl.⁷: **F16C 39/06**

(21) Application number: **00306221.3**

(22) Date of filing: **21.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **12.08.1999 JP 22855699**

(71) Applicant:
**SEIKO SEIKI KABUSHIKI KAISHA**
**Narashino-shi Chiba (JP)**

(72) Inventors:
• **Shi, Yongwei**
  **Narashino-shi, Chiba (JP)**
• **Otachi, Yoshinobu**
  **Narashino-shi, Chiba (JP)**

(74) Representative:
**Sturt, Clifford Mark et al**
**Miller Sturt Kenyon**
**9 John Street**
**London WC1N 2ES (GB)**

(54) **Magnetic bearing device**

(57)     A smaller magnetic bearing device having a reduced overall length in the axial direction of a rotating member. A pair of radial sensors detect radial displacements of the rotating member along an Xs-axis at an angle α from the X-axis along which a pair of radial electromagnets acts to adjust radial displacements. Another pair of radial sensors detect radial displacements of the rotating member along a Ys-axis at an angle β from the Y-axis along which another pair of radial electromagnets acts to adjust radial displacements. The detected radial displacements are converted into displacements in the X-axis and Y-axis directions in which the pairs of radial electromagnets are respectively arranged. The radial electromagnets are exited to perform adjustment based on the converted displacements.

FIG.1

## Description

The present invention relates generally to magnetic bearing devices and, more particularly, to a smaller magnetic bearing device having a reduced overall length in the axial direction of a rotating member.

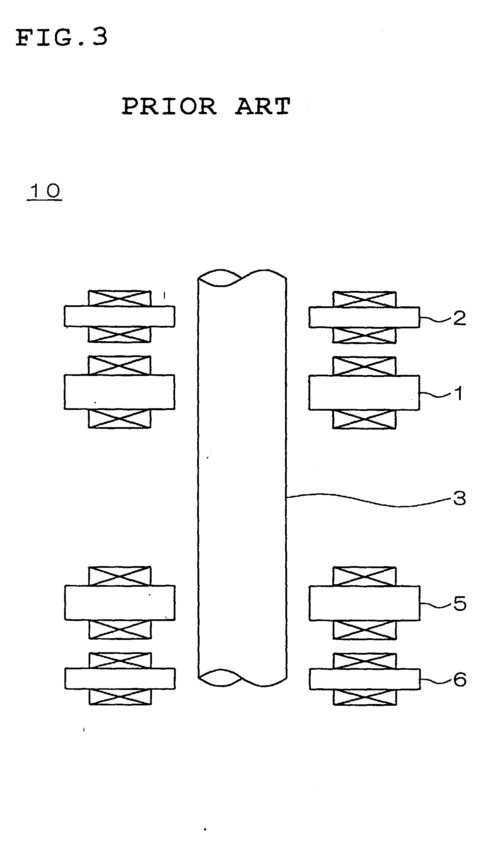

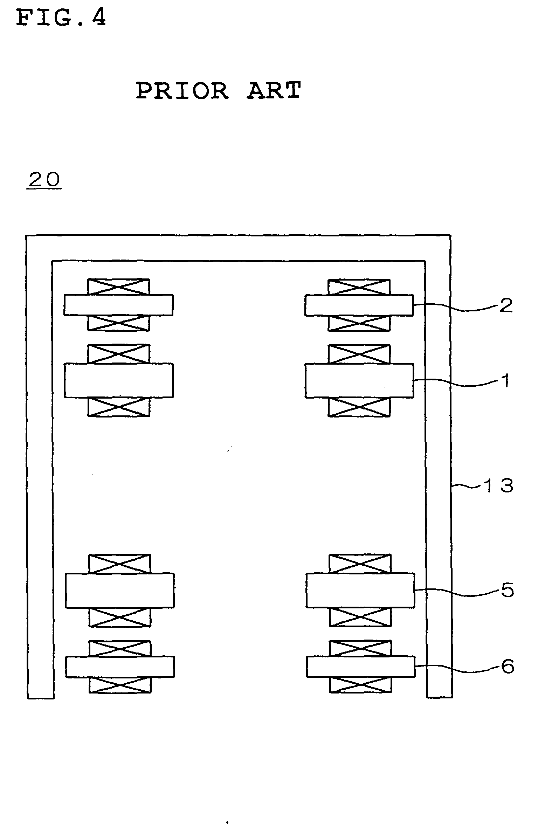

Fig. 3 illustrates a magnetic bearing device 10 of a five-axes active control type having a rotating member formed as an inner rotor 3, and Fig. 4 illustrates a magnetic bearing device 20 of a five-axes active control type having a rotating member formed as an outer rotor 13.

In the devices shown in Figs. 3 and 4, a control means (not shown) performs control for reducing a radial displacement of an upper portion of the inner rotor 3 or the outer rotor 13 by controlling the magnetic attraction of an upper radial electromagnet 1 on the basis of the radial displacement of the upper portion of the inner rotor 3 or the outer rotor 13 detected with an upper radial displacement sensor 2.

On the other hand, another control means (not shown) performs control for reducing a radial displacement of a lower portion of the inner rotor 3 or the outer rotor 13 by means of a lower radial electromagnet 5 on the basis of the radial displacement detected with a lower radial displacement sensor 6.

In the conventional magnetic bearing devices 10 and 20, however, the upper radial displacement sensor 2, the upper radial electromagnet 1, the lower radial electromagnet 5 and the lower radial displacement sensor 6 are arranged in the axial direction of the rotating member. Therefore, the magnetic bearing devices 10 and 20 are enlarged in the axial direction of the rotating member to accommodate these components, and it is difficult to reduce the overall size of the bearing devices.

An invention, designed not to reduce the size of a magnetic bearing device but to improve the stability with which radial displacements of a rotating member of a magnetic bearing device are controlled, has been disclosed (in Japanese Patent Application Laid-open No. Hei 7-238928), in which radial electromagnets and radial displacement sensors are arranged on the same radial plane and, as a result, the magnetic bearing device is shortened in the axial direction.

However, this known invention is limited to the arrangement of the radial electromagnets and the radial displacement sensors placed opposite from each other about the axis of rotation. In this conventional art, therefore, it is difficult to control displacements in the radial direction because control currents in the radial electromagnets and the resulting magnetic attraction are not proportional to each other, and for other reasons, as described below.

In view of the above-described problems of the conventional art, an object of the present invention is to provide a smaller magnetic bearing device having a reduced overall length in the axial direction of a rotating member.

To achieve the above-described object, according to the present invention, there is provided a magnetic bearing device comprising radial magnetic force generation means for supporting, by magnetic forces, a rotating member in the radial direction of the same in a non-contact manner, radial displacement detection means for detecting radial displacements of the rotating member, calculation means for performing calculation to correct output signals from the radial displacement detection means, and control means for controlling the magnetic forces of the radial magnetic force generation means on the basis of results of calculation and correction performed by the calculation means.

The radial magnetic force generation means has at least two pairs of components. Each pair of components are placed opposite from each other about the center of rotation of the rotating member by being spaced apart by an angle of 180° in the direction of rotation of the rotating member. If the radial magnetic generation means comprises a pair of electromagnets in the opposite places, the values of currents respectively flowing through the coils of the pair of electromagnets are respectively set to I1 in equation 1 and I2 in equation 2 shown below, so that a control current value of the electromagnets and the magnetic attraction of the electromagnets exerted on the rotating member can be proportional to each other. Therefore, control of displacements of the rotating member in the radial direction can be performed easily based on a linear automatic control theory.

$$I1 = I01 + \Delta I \tag{1}$$

$$I2 = I02 - \Delta I \tag{2}$$

where I01 and I02 are set direct-current components in I1 and I2, respectively, which correspond to the static magnetic attractions of the electromagnets. The currents I01 and I02 may be equalized depending upon the attitude angle at which the magnetic bearing device is installed. Also in the above equations, $\Delta I$ represents a control current value, i.e., a current value adjusted by the control means

The radial displacement detection means has at least two pairs of components. Each pair of components are placed opposite from each other about the center of rotation of the rotating member by being spaced apart by an angle of 180° in the direction of rotation of the rotating member. If the radial displacement detection means comprises inductance type displacement sensors which convert radial displacements of the rotating member in the radial direction into changes in the inductances of coils, the coils may be used as components of a bridge circuit to perform temperature compensation of the radial displacement detection means.

As described above, each of the radial magnetic force generation means and the radial displacement detection means is provided in at least two pairs of places spaced apart by 180°, thereby facilitating the control and improving the control accuracy in comparison with the conventional art.

The radial magnetic force generation means and the radial displacement detection means are arranged along one plane extending in the radial direction of the rotating member while being spaced apart from each other by predetermined angles in the direction of rotation of the rotating member. This arrangement makes it possible to reduce the size of the magnetic bearing device. The radial magnetic force generation means and the radial displacement detection means are arranged at the same position in the axial direction of the rotating member and come in a collocated relationship with each other. Therefore, the performance of radial displacement control of the rotating member can be improved.

The predetermined angles may be equal or different angles. The calculation means corrects the output signals from the radial displacement detection means by calculation on the basis of the predetermined angles. Therefore, it is possible to obtain the radial displacements of the rotating member in the directions in which magnetic forces are exerted on the rotating member by the radial magnetic force generation means, regardless of whether the predetermined angles are equal or different.

According to the present invention, each of the radial magnetic force generating means and the radial displacement detection means has north and south magnetic poles, and it is characterized in that the polarities of the magnetic poles of the radial magnetic force generation means and the radial displacement detection means located adjacent to each other have the same polarity.

By making adjacent magnetic poles have the same polarity, magnetic interference between the radial magnetic force generation means and the radial displacement detection means can be reduced even if the radial magnetic force generation means and the radial displacement detection means are located close to each other, thereby enabling the radial displacement detection means to detect displacements of the rotating member with high accuracy.

Further, according to the present invention, it is characterized in that the radial magnetic force generation means and the radial displacement detection means respectively have coils formed on one iron core.

Thus, by winding the respective coils of the radial magnetic force generation means and the radial displacement detection means on the same iron core, the magnetic bearing device can be formed to have a simple structure formed of a smaller number of component parts.

Embodiments of the present invention will now be described by way of further example only and with reference to the accompanying drawings, in which:-

Fig. 1 is a schematic plan view of a portion of an embodiment of the present invention;
Fig. 2 is a longitudinal cross-sectional view of the embodiment shown in figure 1.
Fig. 3 is a diagram showing an example of a conventional magnetic bearing device (inner rotor type) capable of five axes control; and
Fig. 4 is a diagram showing an example of a conventional magnetic bearing device (outer rotor type) capable of five axes control.

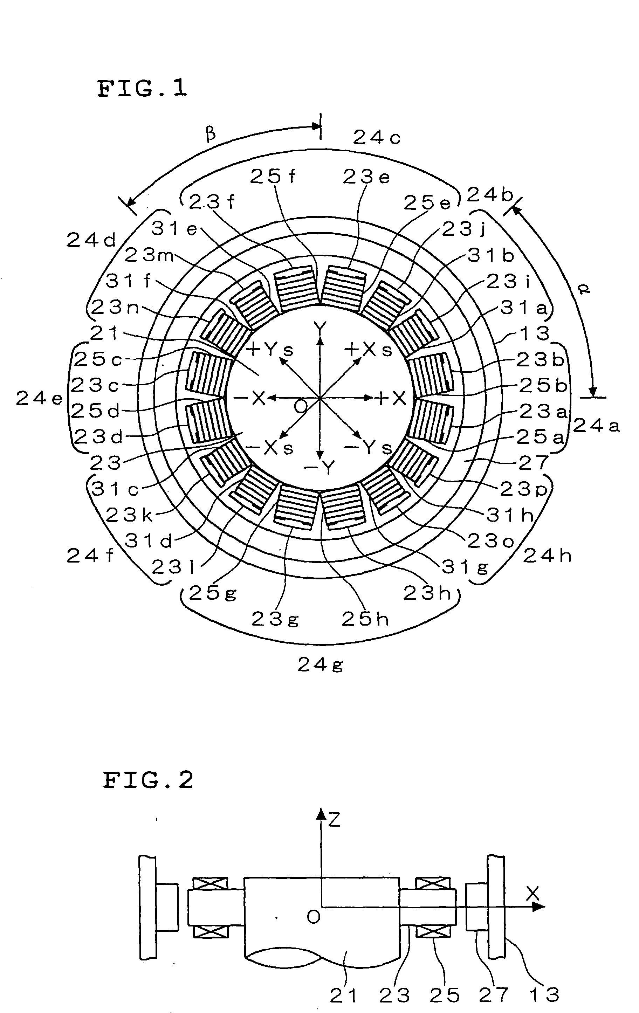

An embodiment of the present invention will be described below. Fig. 1 is a plan view of an embodiment of the present invention. Fig. 2 shows a vertical cross-sectional view. Note that components of the invention identical or corresponding to those shown in Figs. 3 and 4 are indicated by the same reference numerals and the description thereof will be omitted.

Referring to Fig. 1, an iron core 23 is fixed to a stator 21. Magnetic poles 23a and 23b of a radial electromagnet 24a provided as a radial magnetic force generation means are formed on a right-hand portion of the iron core 23 so as to be located on the opposite sides of a line extending in the X-axis plus direction. On the other hand, magnetic poles 23c and 23d of a radial electromagnet 24e provided as a radial magnetic force generation means are formed on a left-hand portion of the iron core 23 so as to be located on the opposite sides of a line extending in the X-axis minus direction.

Coils 25a and 25b for the magnetic poles 23a and 23b are wound in the opposite directions to make the polarities of the magnetic poles 23a and 23b opposite from each other. For example, the magnetic pole 23a is a north pole while the magnetic pole 23b is a south pole. The magnetic poles 23c and 23d are also formed so as to have opposite polarities. For example, the magnetic pole 23c is a north pole while the magnetic pole 23d is a south pole.

Magnetic poles 23e and 23f of a radial electromagnet 24c provided as a radial magnetic force generation means are formed on an upper portion, as viewed in Fig. 1, of the iron core 23 so as to be located on the opposite sides of a line extending in the Y-axis plus direction. On the other hand, magnetic poles 23g and 23h of a radial electromagnet 24g provided as a radial magnetic force generation means are formed on a lower portion of the iron core 23 so as to be located on the opposite sides of a line extending in the Y-axis minus direction. Coils 25e, 25f, 25g, and 25h are wound to form the magnetic poles 23e, 23f, 23g, and 23h, respectively. The magnetic pole 23e is a north pole; the magnetic pole 23f, a south pole; the magnetic pole 23g, a north pole; and the magnetic pole 23h, a south pole.

Magnetic poles 23i and 23j of a radial sensor 24b provided as a radial displacement detection means are formed on an upper right portion of the iron core 23 so as to be located on the opposite sides of an Xs-axis imaginarily drawn at an angle α from the line in the X-axis plus direction. Coils 31a and 31b are wound to form the magnetic poles 23i and 23j, respectively. The coils 31a and 31b for the magnetic poles 23i and 23j are wound in the opposite directions to make the polarities of the magnetic poles 23i and 23j opposite from each other. For example, the magnetic pole 23i is a south pole while the magnetic pole 23j is a north pole.

Magnetic poles 23k and 23l of a radial sensor 24f provided as a radial displacement detection means are formed on a lower left portion of the iron core 23 so as to be located on the opposite sides of a line extending in the Xs-axis minus direction. Coils 31c and 31d are wound to form the magnetic poles 23k and 23l, respectively.

The polarities of the magnetic poles 23k and 23l are also opposite from each other. For example, the magnetic pole 23k is a south pole while the magnetic pole 23l is a north pole.

Magnetic poles 23m and 23n of a radial sensor 24d provided as a radial displacement detection means are formed on an upper left portion of the iron core 23 so as to be located on the opposite sides of a Ys-axis imaginarily drawn at an angle β from the line in the Y-axis plus direction. Coils 31e and 31f are wound to form the magnetic poles 23m and 23n, respectively.

The coils 31e and 31f for the magnetic poles 23m and 23n are wound in the opposite directions to make the polarities of the magnetic poles 23m and 23n opposite from each other. For example, the magnetic pole 23m is a south pole while the magnetic pole 23n is a north pole.

Magnetic poles 23o and 23p of a radial sensor 24h provided as a radial displacement detection means are formed on a lower right portion of the iron core 23 so as to be located on the opposite sides of a line extending in the Ys-axis minus direction. Coils 31g and 31h are wound to form the magnetic poles 23o and 23p, respectively.

The polarities of the magnetic poles 23o and 23p are also opposite from each other. For example, the magnetic pole 23o is a south pole while the magnetic pole 23p is a north pole.

An outer rotor 13 has a target (e.g., a laminated piece of steel, or a piece of ferrite) 27 fixed on its inner wall. The outer rotor 13 is set so that the target 27 faces the magnetic poles 23a, 23b, 23c, 23d, 23e, 23f, 23g, and 23h of the radial electromagnets 24a, 24c, 24e, and 24g, and the magnetic poles 23i, 23j, 23k, 23l, 23m, 23n, 23o, and 23p of the radial sensors 24b, 24d, 24f, and 24h, with a clearance provided between the target 27 and these magnetic poles. The position of the outer rotor 13 is adjusted by the magnetic attractions exerted on the target 27 by the radial electromagnets 24a, 24c, 24e, and 24g.

The radial electromagnets 24a, 24c, 24e, and 24g, and the radial sensors 24b, 24d, 24f, and 24h are formed along the same radial plane and on the same iron core 23.

The operation of the embodiment of the present invention will now be described.

A current is caused to flow through the coils 25a and 25b for the magnetic poles 23a and 23b of the radial electromagnet 24a to form the magnetic poles 23a and 23b as a north pole and a south pole, respectively, thereby forming a closed magnetic circuit between the radial electromagnet 24a and the target 27.

On the other hand, a current is caused to flow through the coils 25c and 25d for the magnetic poles 23c and 23d of the radial electromagnet 24e to form the magnetic poles 23c and 23d as a north pole and a south pole, respectively, thereby forming a closed magnetic circuit between the radial electromagnet 24e and the target 27.

Similarly, with respect to the direction along the Y-axis, a current is caused to flow through the coils 25e and 25f for the magnetic poles 23e and 23f of the radial electromagnet 24c to form the magnetic poles 23e and 23f as a north pole and a south pole, respectively, thereby forming a closed magnetic circuit between the radial electromagnet 24c and the target 27.

On the other hand, a current is caused to flow through the coils 25g and 25h for the magnetic poles 23g and 23h of the radial electromagnet 24g to form the magnetic poles 23g and 23h as a north pole and a south pole, respectively, thereby forming a closed magnetic circuit between the radial electromagnet 24g and the target 27.

At this time, if the value of the current flowing through the coils 25a and 25b is I1 in equation 1, the current represented by I2 in equation 2 is caused to flow through the coils 25c and 25d. Similarly, if the value of the current flowing through the coils 25e and 25f is I1 in equation 1, the current represented by I2 in equation 2 is caused to flow through the coils 25g and 25h.

Also, a current is caused to flow through the coils 31a and 31b for the magnetic poles 23i and 23j of the radial sensor 24b to form the magnetic poles 23i and 23j as a south pole and a north pole, respectively, thereby forming a closed magnetic circuit between the radial sensor 24b and the target 27.

On the other hand, a current is caused to flow through the coils 31c and 31d for the magnetic poles 23k and 23l of the radial sensor 24f to form the magnetic poles 23k and 23l as a south pole and a north pole, respectively, thereby forming a closed magnetic circuit between the radial sensor 24f and the target 27.

Similarly, with respect to the direction along the Ys-axis, a current is caused to flow through the coils 31e and 31f for the magnetic poles 23m and 23n of the radial sensor 24d to form the magnetic poles 23m and 23n as a south pole and a north pole, respectively, thereby forming a closed magnetic circuit between the radial sensor 24d and the target 27.

On the other hand, a current is caused to flow through the coils 31g and 31h for the magnetic poles 23o and 23p of the radial sensor 24h to form the magnetic poles 23o and 23p as a south pole and a north pole, respectively, thereby forming a closed magnetic circuit between the radial sensor 24h and the target 27.

The direction of winding of the coils for the magnetic poles of the radial electromagnets and the radial sensors is determined as described below. For example, the magnetic poles 23i and 23j of the radial sensor 24b are north and south poles, respectively, with respect to the above-mentioned polarities of the magnetic poles of the adjacent radial electromagnet 24a. This is because, if the magnetic pole 23i is a north pole, magnetic interference occurs between the magnetic circuit formed between the magnetic poles 23j and 23i of the radial sensor 24b and the target 27 and the magnetic circuit formed between the magnetic poles 23a and 23b of the adjacent radial electromagnet 24a and the target 27 since the adjacent magnetic pole 23b of the radial electromagnet 24a is a south pole, so that the radial sensors cannot detect displacements of the outer rotor 13 with accuracy.

Similarly, the direction of winding for the magnetic poles 23e and 23f of the radial electromagnet 24c is determined so that the magnetic poles 23e and 23f are north and south poles, respectively, that is, the magnetic pole 23e has the polarity of a north pole, as does the adjacent magnetic pole 23j. Thus, the direction of winding is determined so that one radial electromagnet magnetic pole and one radial sensor magnetic pole adjacent to each other have the same polarity.

Each of the lengths of the closed circuits formed between the magnetic poles of the radial sensors and the target 27, i.e., the length of the closed magnetic circuit formed between the magnetic poles 23i and 23j and the target 27, the length of the magnetic circuit formed between the magnetic poles 23k and 23l and the target 27, the length of the magnetic circuit formed between the magnetic poles 23m and 23n and the target 27, and the length of the magnetic circuit formed between the magnetic poles 23o and 23p and the target 27, changes according to a displacement of the outer rotor 13 in the radial direction to cause a change in the inductance of the corresponding one of the pairs of coils 31a and 31b, coils 31c and 31d, coils 31e and 31f, and coils 31g and 31h.

The changes in inductance caused as described above are used to detect the radial displacements of the portions of the outer rotor 13 facing the radial sensors 24b, 24d, 24f, and 24h in the directions toward the center line of rotation of the outer rotor 13 (referred to simply as radial displacements of outer rotor 13).

However, the detected radial displacements are values xs and ys on the Xs- and Ys-axes respectively formed at angles $\alpha$ and $\beta$ from the X- and Y-axes corresponding to the directions of the magnetic forces exerted on the outer rotor 13 by the radial electromagnets. Therefore, calculation circuits (not shown) convert, by the following equations 3 and 4, these values into values x and y in the X-axis and Y-axis directions in which the position in the radial direction is actually adjusted with the radial electromagnets.

$$x = (xs \cdot \cos\beta - ys \cdot \sin\alpha)/\cos(\alpha - \beta) \quad (3)$$

$$y = (xs \cdot \sin\beta + ys \cdot \cos\alpha)/\cos(\alpha - \beta) \quad (4)$$

On the basis of the values x on the X-axis and the values y on the Y-axis thereby converted, a control means (not shown) adjusts the control current value $\Delta I$ in equations 1 and 2, in the current flowing through each of the pairs of coils 25a and 25b, 25c and 25d, 25e and 25f, and 25g and 25h of the radial electromagnets 24a, 24c, 24e, and 24g so that the radial displacements of the rotor 13 become equal to the predetermined target values.

This radial displacement control of the outer rotor 13 can be performed easily because the control current value $\Delta I$ of the magnetic poles of each pair of radial electromagnets in the X-axis or Y-axis direction is proportional to the magnetic attraction, and because a linear automatic control theory can be applied to the control. If a bridge circuit is formed by the coils for the magnetic poles of the radial sensors, temperature compensation of the radial sensors can be performed.

The number of component parts of the magnetic bearing device can be reduced since one target 27 and one iron core 23 suffice. Further, the detection points at which radial displacements of the outer rotor 13 are detected by the radial sensors, and the points of action at which the magnetic forces of the radial electromagnets are exerted on the outer rotor 13 are at the same position in the axial direction and in a collocated relationship with each other. Therefore, the performance of radial displacement control of the outer rotor 13 can be improved.

If the angles $\alpha$ and $\beta$ are equal to each other and are each represented by $\alpha$, equations 3 and 4 can be simplified to form the following equations 5 and 6:

$$x = xs \cdot \cos\alpha - ys \cdot \sin\alpha \quad (5)$$

$$y = xs \cdot \sin\alpha + ys \cdot \cos\alpha \quad (6)$$

If each of the angles $\alpha$ and $\beta$ is 45°, further simplified equations 7 and 8 shown below can be formed from equations 3 and 4.

$$x = (xs - ys)\cos45° \quad (7)$$

$$y = (xs + ys)\cos45° \quad (8)$$

In the case where software is used as calculation means under this condition, a program for calculation can be simplified and the time required for calculation can be reduced. In the case where the calculation means is formed of an electronic circuit, the number of circuit components can be reduced.

The radial displacement detection means does not detect a translational displacement of the outer rotor 13 but detects radial displacements of the portions of the outer rotor 13 facing the radial displacement detection means. Accordingly, one group of means in accordance with the present invention may be provided in a bearing device using, as an axial bearing for outer rotor 13, a bearing, such as a pivot bearing or a rolling bearing, which supports outer rotor 13 in a contact manner, thereby enabling control of the inclination of outer rotor 13.

The present invention has been described with respect to an example where the rotating member is an outer rotor. However, the present invention is, of course, applicable even if the rotating member is an inner rotor.

If a combination of radial displacement detection means and radial magnetic force generation means in accordance with the present invention is provided in one place as seen in the axial direction of a rotating member, a three-axes active control type magnetic bearing can be formed. Also, if radial displacement detection means and radial magnetic force generation means in accordance with the present invention are provided in two places distanced apart from each other in the axial direction of a rotating member, a five-axes active control type magnetic bearing can be formed, enabling control of any radial displacement and any inclination of outer rotor 13.

As described above, radial magnetic force generation means and radial displacement detection means are formed along one radial plane, so that the accommodation space inside the magnetic bearing device is not increased, and the size of the magnetic bearing device can be reduced.

According to the present invention, as described above, radial magnetic force generation means and radial displacement detection means are arranged along one radial plane by being spaced apart from each other by predetermined angles in the direction of rotation of a rotating member; radial displacements of the rotating member in the direction of magnetic force generation points of the magnetic force generation means are calculated from radial displacements detected by the radial displacement detection means; and the corresponding radial displacements of the rotating member are controlled on the basis of the calculated radial displacements, thus enabling detection and control of radial displacements of the rotating member without a space in the axial direction. The size of the magnetic bearing device can therefore be reduced.

## Claims

1. A magnetic bearing device comprising:

radial magnetic force generation means for supporting, by magnetic forces, a rotating member in a radial direction of the same;

radial displacement detection means for detecting radial displacements of the rotating member;

calculation means for performing calculation to correct output signals from the radial displacement detection means; and

control means for controlling the magnetic forces of the radial magnetic force generation means based on results of calculation and correction performed by the calculation means,

wherein the radial magnetic force generation means has at least two pairs of components, each pair of the components being placed opposite from each other about a center of rotation of the rotating member by being spaced apart by an angle of 180° in a direction of rotation of the rotating member, and the radial displacement detection means has at least two pairs of components, each pair of the components being placed opposite from each other about the center of rotation of the rotating member by being spaced apart by an angle of 180° in the direction of rotation of the rotating member, the radial magnetic force generation means and the radial displacement detection means being arranged along one plane extending in the radial direction of the rotating member while being spaced apart from each other by predetermined angles in the direction of rotation of the rotating member, and

wherein the calculation means corrects an output signal from the radial displacement detection means by calculation based on the predetermined angle to obtain radial displacements of the rotating member in the directions of magnetic forces exerted on the rotating member by the radial magnetic force generation means.

2. A magnetic bearing device according to Claim 1, wherein each of the radial magnetic force generation means and the radial displacement detection means has north and south magnetic poles, and one of a magnetic poles of the, radial magnetic force generation means and one of the magnetic poles of the radial displacement detection means located adjacent to each other have the same polarity.

3. A magnetic bearing device according to Claim 1 or 2, wherein the radial magnetic force generation means and the radial displacement detection means respectively have coils formed on one iron core.

# FIG.1

# FIG.2

# FIG.3

## PRIOR ART

10

# FIG.4

## PRIOR ART

<u>20</u>